# EUROPÄISCHE PATENTSCHRIFT

(11) **EP 0 399 347 B1**
(45) Veröffentlichungstag und Bekanntmachung des Hinweises auf die Patenterteilung: **14.08.1996**
(21) Anmeldenummer: 90109206.4
(22) Anmeldetag: 16.05.1990
(51) Int. Cl.: C08F 10/00, C08F 4/602

(54) **Verfahren zur Herstellung eines Syndio-Isoblockpolymeren**
Process for preparing a Syndio-isoblockpolymer
Procédé pour préparer des Polymères-bloc syndio-iso

(30) Priorität: 20.05.1989 DE 3916553
(43) Veröffentlichungstag der Anmeldung: 28.11.1990
(73) Patentinhaber: HOECHST AKTIENGESELLSCHAFT, 65926 Frankfurt am Main (DE)
(72) Erfinder: Dolle, Volker, Dr., D-6233 Kelkheim/Taunus (DE); Rohrmann, Jürgen, Dr., D-6237 Liederbach (DE); Winter, Andreas, Dr., D-6233 Kelkheim/Taunus (DE); Antberg, Martin, Dr., D-6238 Hofheim am Taunus (DE); Klein, Robert, Dr., D-6000 Frankfurt am Main (DE)

(56) Entgegenhaltungen:
- EP-A- 0 269 986
- EP-A- 0 344 887
- EP-A- 0 351 392
- EP-A- 0 387 691
- US-A- 3 547 870
- JOURNAL AM. CHEM. SOC., Band 110, 1988, Seiten 6255-6256; J.A. EWEN et al.: "Syndiospecific propylene polymerizations with group 4 metallocenes"

## Beschreibung

Die Erfindung bezieht sich auf ein Verfahren zur Herstellung eines Syndio-Isoblockpolymeren mit langen isotaktischen und syndiotaktischen Sequenzen.

Es ist bekannt, daß Polypropylen in verschiedenen Strukturisomeren existiert:
(a) Hochisotaktisches Polypropylen, in dessen Molekülketten fast alle tertiären C-Atome die gleiche Konfiguration aufweisen,
(b) isotaktisches Stereoblock-PP, in dessen Molekülketten isotaktische Blöcke entgegengesetzter Konfiguration regelmäßig miteinander abwechseln,
(c) syndiotaktisches Polypropylen, in dessen Molekülketten jedes zweite tertiäre C-Atom die gleiche Konfiguration besitzt,
(d) ataktisches Polypropylen, in dessen Molekülketten die tertiären C-Atome eine regellose Konfiguration aufweisen
(e) ataktisch-isotaktisches Stereoblock-PP, in dessen Molekülketten isotaktische und ataktische Blöcke miteinander abwechseln,
und
(f) Isoblock-PP, in dessen Molekülketten isotaktische Blöcke enthalten sind, die durch ein tertiäres C-Atom der jeweils anderen Konfiguration im Vergleich zu den isotaktischen Blöcken voneinander getrennt sind.

J. Am. Chem. Soc. 1988, 110, Seiten 6556-6558 beschreibt die Herstellung von syndiotaktischem Polypropylen mit geringem ataktischem Anteil, in Gegenwart von Isopropyliden-(fluorenyl)-(cyclopentadienyl)-zirkoniumdichlorid bzw. -hafniumdichlorid.

Aus EP-A-387 691 ist die Herstellung hochsyndiotaktischer Polyolefine in Gegenwart von Fluorenyl-Cyclopentadienyl-Hafnocenen bekannt.

EP-A-351 392 beschreibt Metallocen-Katalysatoren, darunter auch Isopropyliden(fluorenyl)-(cyclopentadienyl)-zirkonium dichlorid für die Herstellung von syndiotaktischen Polyolefinen.

US 3,547,870 beschreibt eine Druckfarbe, die 3% bis 25% randiotaktisches Polypropylen enthält, welches seinerseits 20-30% syndiotaktische Segmente enthält.

Es ist ein Verfahren zur Herstellung von isotaktischen Stereoblockpolymeren bekannt, bei welchem Propylen mit Hilfe eines Metallocens eines Metalls der Gruppe IVb, Vb oder VIb des periodensystems polymerisiert wird (vgl. US 4,522,982). Dieses Metallocen ist eine Mono-, Di- oder Tricyclopentadienyl- oder substituierte Cyclopentadienyl-Metallverbindung, insbesondere des Titans. Als Cokatalysator dient ein Aluminoxan.

Allerdings sind die bevorzugt verwendeten Titanocene in verdünnter Lösung nicht ausreichend thermisch stabil, um in einem technischen Verfahren verwendbar zu sein. Außerdem werden bei diesem Verfahren Produkte mit größerer Länge der issotaktischen Sequenzen (n größer 6) nur bei sehr tiefer Temperatur (-60°C) erhalten. Schließlich müssen die Cokatalysatoren in vergleichsweise hoher Konzentration eingesetzt werden, um eine ausreichende Kontaktausbeute zu erreichen, was dazu führt, daß die im Polymerprodukt enthaltenen Katalysatorreste in einem separaten Reinigungsschritt entfernt werden müssen.

Ferner ist bekannt, daß man Stereoblockpolymere von 1-Olefinen mit langen isotaktischen Sequenzen bei technisch günstigen Polymerisationstemperaturen mittels eines Katalysators erhalten kann, welcher aus einer Metallocenverbindung mit durch chirale Gruppen substituierten Cyclopentadienylresten und einem Aluminoxan besteht (vgl. EP 269987).

Weiterhin ist bekannt, daß Stereoblockpolymere von 1-Olefinen mit breiter uni- oder multimodaler Molmassenverteilung erhalten werden können, wenn für die Polymerisation der 1-Olefine ein Katalysator verwendet wird, welcher aus einem Brücken enthaltenden chiralen Metallocen und einem Aluminoxan besteht (vgl. EP 269986). Die Polymeren eignen sich besonders gut für die Herstellung transparenter Folien.

Auch ist bekannt, daß beim Einsatz eines Katalysators auf der Basis von Bis-cyclopentadienylverbindungen des Zirkons und einem Aluminoxan beim Polymerisieren von Propylen nur ataktisches Polymer erhalten wird (vgl. EP 69951).

Außerdem kann mittels löslicher stereorigider chiraler Zirkonverbindungen hochisotaktisches Polypropylen hergestellt werden (vgl. EP 185 918).

Schließlich wurden Isoblockpolymere vorgeschlagen.

Es wurde ein Polymerisationsverfahren gefunden, bei welchem ein Polymer mit regelmäßigem Molekülaufbau mit hoher Molmasse bei technisch günstigen Prozeßtemperaturen in hoher Ausbeute erhalten wird.

Die Erfindung betrifft somit ein Syndio-Isoblockpolymer eines 1-Olefins mit mindestens 3C-Atomen der Formel RCH=CHR', worin R und R' gleich oder verschieden sind und im Wasserstoffatom oder einen Alkylrest mit 1 bis 14 C-Atomen bedeuten oder R und R' mit den'sie verbindenden C-Atomen einen Ring bilden, mit Molekülketten, in denen syndiotaktische und isotaktische Sequenzen enthalten sind, und mit einer Sequenzlänge von 3 bis 50 Monomereinheiten.

Weiterhin betrifft die Erfindung ein Verfahren zur Herstellung des vorgenannten Syndio-Isoblockpolymeren durch Polymerisation eines 1-Olefins der Formel RCH = CHR', worin R und R' die vorgenannte Bedeutung haben, bei einer Temperatur von -60 bis 100°C, einem Druck von 0,5 bis 100 bar, in Lösung, in Suspension oder in der Gasphase, in Gegenwart eines Katalysators, welcher aus einem Metallocen und einem Aluminoxan besteht, dadurch gekennzeichnet, daß das Metallocen eine Verbindung der Formel I 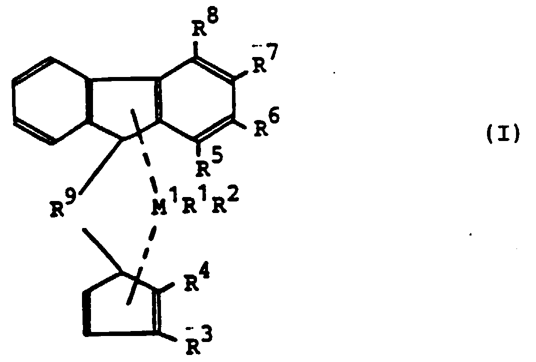 ist, worin
M¹ Titan, Zirkon, Hafnium, Vanadium, Niob oder Tantal ist,
R¹ und R² gleich oder verschieden sind und ein Wasserstoffatom, ein Halogenatom, eine C₁-C₁₀-Alkylgruppe, eine C₁-C₁₀-Alkoxygruppe, eine C₆-C₁₀-Arylgruppe, eine C₆-C₁₀-Aryloxygruppe, eine C₂-C₁₀-Alkenylgruppe, eine C₇-C₄₀-Arylalkylgruppe, eine C₇-C₄₀-Alkylarylgruppe oder eine C₈-C₄₀-Arylalkenylgruppe bedeuten,
R³, R⁴, R⁵, R⁶, R⁷ und R⁸ gleich oder verschieden sind und ein Wasserstoffatom, eine C₁-C₁₀-Alkylgruppe, eine C₁-C₁₀-Alkoxygruppe, eine C₆-C₁₀-Arylgruppe, eine C₆-C₁₀-Aryloxygruppe, eine C₂-C₁₀-Alkenylgruppe, eine C₇-C₄₀-Arylalkylgruppe, eine C₇-C₄₀-Alkylarylgruppe, eine C₈-C₄₀-Arylalkenylgruppe oder ein Halogenatom ist, wobei die Reste R³, R⁴, R⁵, R⁶, R⁷ und R⁸ nicht gleichzeitig ein Wasserstoffatom bedeuten,
R⁹ 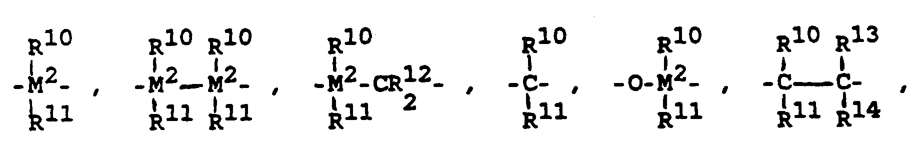 = BR¹⁰, = AlR¹⁰, -Ge-, -Sn-, -O-, -S-, = SO, = SO₂, = NR¹⁰, = CO, = PR¹⁰ oder = P(O)R¹⁰ ist, wobei R¹⁰, R¹¹, R¹², R¹³ und R¹⁴ gleich oder verschieden sind und ein Wasserstoffatom, ein Halogenatom, eine C₁-C₁₀-Alkylgruppe, eine C₁-C₁₀-Fluoralkylgruppe, eine C₆-C₁₀-Fluorarylgruppe, eine C₆-C₁₀-Arylgruppe, eine C₁-C₁₀-Alkoxygruppe, eine C₂-C₁₀-Alkenylgruppe, eine C₇-C₄₀-Arylalkylgruppe, eine C₈-C₄₀-Arylalkenylgruppe oder eine C₇-C₄₀-Alkylarylgruppe bedeuten oder R¹⁰ und R¹¹ oder R¹⁰ und R¹² jeweils mit den sie verbindenden Atomen einen Ring bilden, und
M² Silizium, Germanium oder Zinn ist.

Der für das erfindungsgemäße Verfahren zur verwendende Katalysator besteht aus einem Aluminoxan und einem Metallocen der Formel I

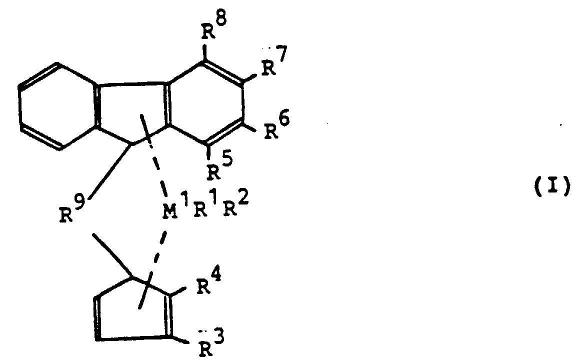

In Formel I ist M¹ ein Metall aus der Gruppe Titan, Zirkon, Hafnium, Vanadium, Niob und Tantal, vorzugsweise Zirkon oder Hafnium
R¹ und R² sind gleich oder verschieden und bedeuten ein Wasserstoffatom, eine C₁-C₁₀-, vorzugsweise C₁-C₃-Alkylgruppe, eine C₁-C₁₀-, vorzugsweise C₁-C₃-Alkoxygruppe, eine C₆-C₁₀-, vorzugsweise C₆-C₈-Arylgruppe, eine C₆-C₁₀-, vorzugsweise C₆-C₈-Aryloxygruppe, eine C₂-C₁₀- , vorzugsweise C₂-C₄-Alkenylgruppe, eine C₇-C₄₀-, vorzugsweise C₇-C₁₀-Arylalkylgruppe, eine C₇-C₄₀-, vorzugsweise C₇-C₁₂-Alkylarylgruppe, eine C₈-C₄₀-, vorzugsweise C₈-C₁₂-Arylalkenylgruppe oder ein Halogenatom, vorzugsweise Chlor.
R^{3,} R^{4,} R^{5,} R⁶, R⁷, R⁸ sind gleich oder verschieden und bedeuten ein Wasserstoffatom (aber nicht gleichzeitig), eine C₁-C₁₀-, vorzugsweise C₁-C₃-Alkylgruppe, besonders bevorzugt Methyl (für R³) und H (für R⁴, R⁵, R⁶, R⁷, R⁸).
R⁹ ist eine ein- oder mehrgliedrige Brücke und bedeutet 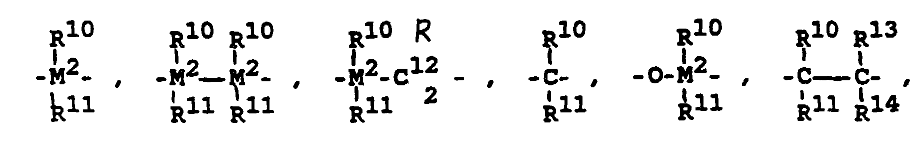 = BR¹⁰, = AlR¹⁰, -Ge-, -Sn-, -O-, -S-, = SO, = SO₂, = NR¹⁰, - CO, - PR¹⁰ oder = P(O)R¹⁰ ist, wobei R¹⁰, R¹¹, R¹², R¹³ und R¹⁴ gleich oder verschieden sind und ein Wasserstoffatom, ein Halogenatom, vorzugsweise Chlor, eine C₁-C₁₀-, vorzugsweise C₁-C₃-Alkylgruppe, insbesondere Methyl- oder Ethylgruppe, eine C₁-C₁₀-Fluoralkylgruppe, vorzugsweise CF₃-Gruppe, eine C₆-C₁₀-Fluorarylgruppe, vorzugsweise Pentafluorphenylgruppe, eine C₆-C₁₀-, vorzugsweise C₆-C₈-Arylgruppe, eine C₁-C₁₀-, vorzugsweise C₁-C₄-Alkoxygruppe, insbesondere Methoxygruppe, eine C₂-C₁₀-, vorzugsweise C₂-C₄-Alkenylgruppe, eine C₇-C₄₀-, vorzugsweise C₇-C₁₀-Arylalkylgruppe, eine C₈-C₄₀-, vorzugsweise C₈-C₁₂-Arylalkenylgruppe oder eine C₇-C₄₀-, vorzugsweise C₇-C₁₂-Alkylarylgruppe bedeuten, oder R¹⁰ und R¹¹ oder R¹⁰ und R¹² bilden jeweils zusammen mit den sie verbindenden Atomen einen Ring.
M² ist Silizium, Germanium oder Zinn, bevorzugt Silizium oder Germanium.
R⁹ ist vorzugsweise =CR¹⁰R¹¹, =SiR¹⁰R¹¹, =GeR¹⁰R¹¹, -O-, -S-, =SO, =PR¹⁰ oder =P(O)R¹⁰.

Die vorstehend beschriebenen Metallocene können nach folgendem allgemeinen Reaktionsschema hergestellt werden:

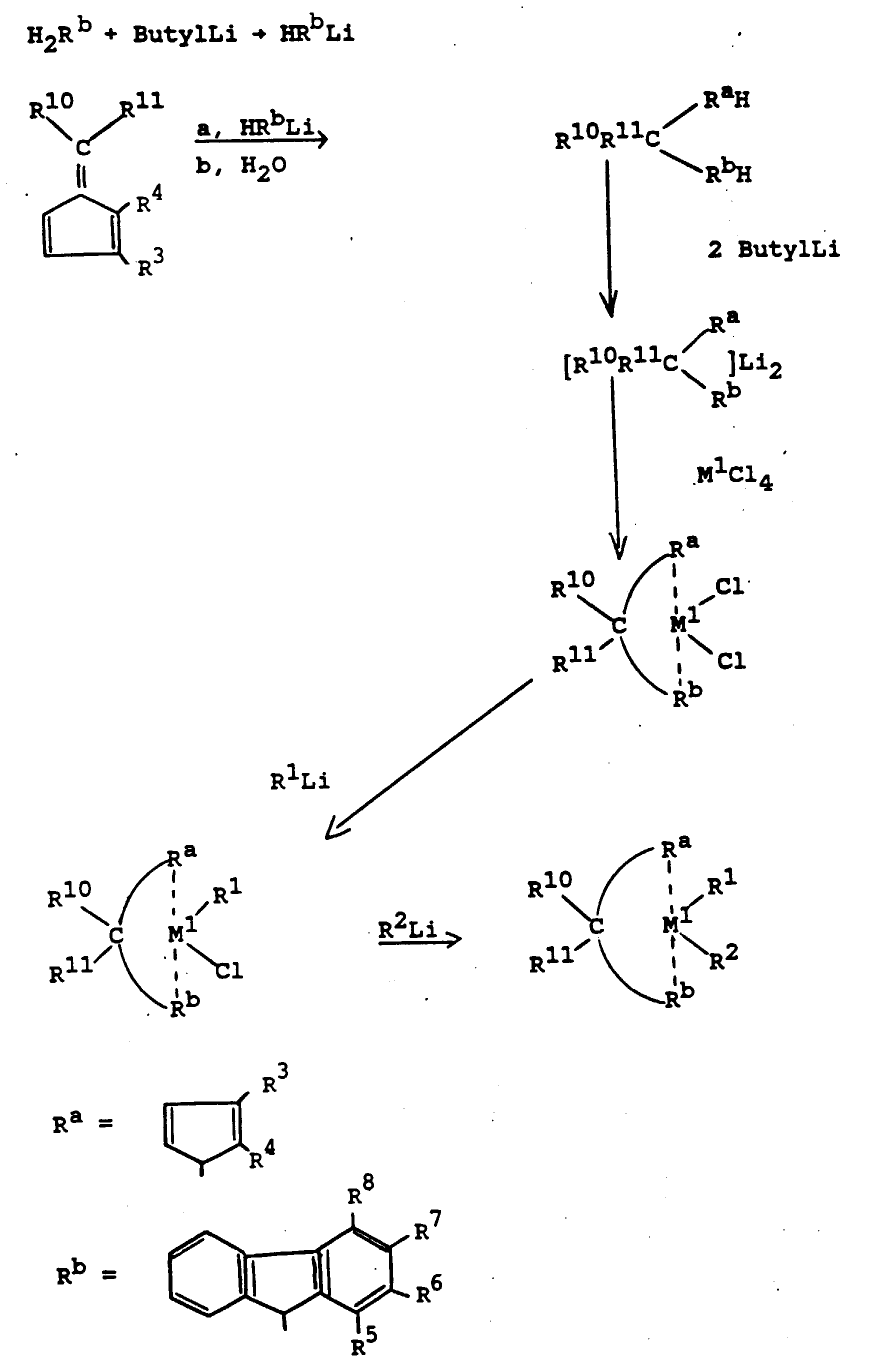

Bevorzugt eingesetzte Metallocene sind Dimethylmethylen(9-fluorenyl)-3-methyl-(cyclopentadienyl)-zirkondichlorid, (Dimethylmethylen)(9-fluorenyl)-3-methyl-(cyclopentadienyl) hafniumdichlorid.

Der Cokatalysator ist ein Aluminoxan der Formel II 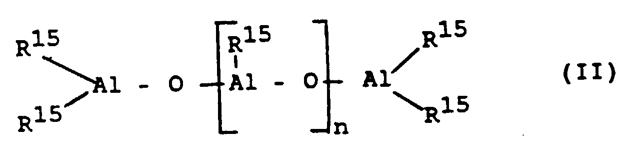 für den linearen Typ und/oder der Formel III 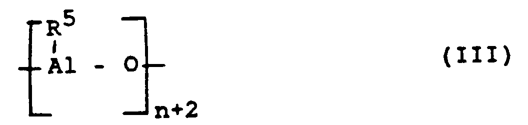 für den cyclischen Typ. In diesen Formeln bedeuten R¹⁵ eine C₁-C₆-Alkylgruppe, vorzugsweise Methyl, Ethyl oder Isobutyl, Butyl oder Neopentyl, oder Phenyl oder Benzyl. Besonders bevorzugt ist Methyl. n ist eine ganze Zahl von 2 bis 50, bevorzugt 5 bis 40. Die exakte Struktur des Aluminoxans ist jedoch nicht bekannt.

Das Aluminoxan kann auf verschiedene Art und Weise hergestellt werden.

Eine Möglichkeit ist die vorsichtige Zugabe von Wasser zu einer verdünnten Lösung eines Aluminiumtrialkyls, indem die Lösung des Aluminiumtrialkyls, vorzugsweise Aluminiumtrimethyl, und das Wasser jeweils in kleinen Portionen in eine vorgelegte größere Menge eines inerten Lösemittels eingetragen werden und zwischendurch das Ende der Gasentwicklung jeweils abgewartet wird.

Bei einem anderen Verfahren wird fein gepulvertes Kupfersulfatpentahydrat in Toluol aufgeschlämmt und in einem Glaskolben unter Inertgas bei etwa -20°C mit soviel Aluminiumtrialkyl versetzt, daß für je 4 Al-Atome etwa 1 mol CuSO₄·5H₂O zur Verfügung steht. Nach langsamer Hydrolyse unter Alkan-Abspaltung wird die Reaktionsmischung 24 bis 48 Stunden bei Zimmertemperatur belassen, wobei gegebenenfalls gekühlt werden muß, damit die Temperatur nicht über 30°C ansteigt. Anschließend wird das im Toluol gelöste Aluminoxan von dem Kupfersulfat abfiltriert und die Lösung im Vakuum eingeengt. Es wird angenommen, daß bei diesem Herstellungsverfahren die niedermolekularen Aluminoxane unter Abspaltung von Aluminiumtrialkyl zu höheren Oligomeren kondensieren.

Weiterhin erhält man Aluminoxane, wenn man bei einer Temperatur von -20 bis 100°C in einem inerten aliphatischen oder aromatischen Lösemittel, vorzugsweise Heptan oder Toluol, gelöstes Aluminiumtrialkyl, vorzugsweise Aluminiumtrimethyl, mit kristallwasserhaltigen Aluminiumsalzen, vorzugsweise Aluminiumsulfat, zur Reaktion bringt. Dabei beträgt das Volumenverhältnis zwischen Lösemittel und dem verwendeten Aluminiumalkyl 1 : 1 bis 50 : 1 - vorzugsweise 5 : 1 - und die Reaktionszeit, die durch Abspaltung des Alkans kontrolliert werden kann, 1 bis 200 Stunden - vorzugsweise 10 bis 40 Stunden.

Von den kristallwasserhaltigen Aluminiumsalzen werden insbesondere jene verwendet, die einen hohen Gehalt an Kristallwasser aufweisen. Besonders bevorzugt ist Aluminiumsulfat-Hydrat, vor allem die Verbindungen Al₂(SO₄)₃·16H₂O und Al₂(SO₄)₃·18H₂O mit dem besonders hohen Kristallwassergehalt von 16 bzw. 18 mol H₂O/mol Al₂(SO₄)₃.

Eine weitere Variante zur Herstellung von Aluminoxanen besteht darin, Aluminiumtrialkyl, vorzugsweise Aluminiumtrimethyl, in dem im Polymerisationskessel vorgelegten Suspensionsmittel, vorzugsweise im flüssigen Monomeren, in Heptan oder Toluol, zu lösen und dann die Aluminiumverbindung mit Wasser umzusetzen.

Neben den zuvor geschilderten Verfahren zur Herstellung von Aluminoxanen gibt es weitere, welche brauchbar sind. Unabhängig von der Art der Herstellung ist allen Aluminoxanlösungen ein wechselnder Gehalt an nicht umgesetztem Aluminiumtrialkyl, das in freier Form oder als Addukt vorliegt, gemeinsam. Dieser Gehalt hat einen noch nicht genau geklärten Einfluß auf die katalytische Wirksamkeit, der je nach eingesetzter Metallocenverbindung verschieden ist.

Es ist möglich, das Metallocen vor dem Einsatz in der Polymerisationsreaktion mit einem Aluminoxan der Formel II und/oder III vorzuaktivieren. Dadurch wird die Polymerisationsaktivität deutlich erhöht und die Kornmorphologie verbessert.

Die Voraktivierung der Übergangsmetallverbindung wird in Lösung vorgenommen. Bevorzugt wird dabei das Metallocen in einer Lösung des Aluminoxans in einem inerten Kohlenwasserstoff aufgelöst. Als inerter Kohlenwasserstoff eignet sich ein aliphatischer oder aromatischer Kohlenwasserstoff.
Bevorzugt wird Toluol verwendet.

Die Konzentration des Aluminoxans in der Lösung liegt im Bereich von ca. 1 Gew.-% bis zur Sättigungsgrenze, vorzugsweise von 5 bis 30 Gew.-%, jeweils bezogen auf die Gesamtlösung. Das Metallocen kann in der gleichen Konzentration eingesetzt werden, vorzugsweise wird es jedoch in einer Menge von 10⁻⁴ - 1 mol pro mol Aluminoxan eingesetzt. Die Voraktivierungszeit beträgt 5 Minuten bis 60 Stunden, vorzugsweise 5 bis 60 Minuten. Man arbeitet bei einer Temperatur von -78°C bis 100°C, vorzugsweise 0 bis 70°C.

Eine deutlich längere Voraktivierung ist möglich, sie wirkt sich normalerweise jedoch weder aktivitätssteigernd noch aktivitätsmindernd aus, kann jedoch zu Lagerzwecken durchaus sinnvoll sein.

Die Polymerisation wird in bekannter Weise in Lösung, in Suspension oder in der Gasphase, kontinuierlich oder diskontinuierlich, ein- oder mehrstufig bei einer Temperatur von -60 bis 200°C, vorzugsweise -30 bis 100°C, insbesondere 0 bis 80°C, durchgeführt.

Der Gesamtdruck im Polymerisationssystem beträgt 0,5 bis 100 bar. Bevorzugt ist die Polymerisation in dem technisch besonders interessanten Druckbereich von 5 bis 60 bar. Monomere, deren Siedepunkt höher ist als die Polymerisationstemperatur, werden bevorzugt drucklos polymerisiert.

Dabei wird die Metallocenverbindung in einer Konzentration, bezogen auf das Übergangsmetall, von 10⁻³ bis 10⁻⁷, vorzugsweise 10⁻⁴ bis 10⁻⁶ mol Übergangsmetall pro dm³ Lösemittel bzw. pro dm³ Reaktorvolumen angewendet. Das Aluminoxan wird in einer Konzentration von 10⁻⁵ bis 10⁻¹ mol, vorzugsweise 10⁻⁵ bis 10⁻² mol pro dm³ Lösemittel bzw. pro dm³ Reaktorvolumen verwendet. Prinzipiell sind aber auch höhere Konzentrationen möglich.

Wenn die Polymerisation als Suspensions- oder Lösungspolymerisation durchgeführt wird, wird ein für das Ziegler-Niederdruckverfahren gebräuchliches inertes Lösemittel verwendet. Beispielsweise arbeitet man in einem aliphatischen oder cycloaliphatischen Kohlenwasserstoff; als solcher sei beispielsweise Butan, Pentan, Hexan, Heptan, Isooctan, Cyclohexan, Methylcyclohexan genannt.

Weiterhin kann eine Benzin- bzw. hydrierte Dieselölfraktion benutzt werden. Brauchbar ist auch Toluol. Bevorzugt wird im flüssigen Monomeren polymerisiert.

Polymerisiert bzw. copolymerisiert werden Olefine der Formel RCH = CHR′, worin R und R′ gleich oder verschieden sind und ein Wasserstoffatom oder einen Alkylrest mit 1 bis 14 C-Atomen bedeuten oder R und R′ mit den sie verbindenen C-Atomen einen Ring bilden. Beispiele für solche Olefine sind, Propylen, 1-Buten, 1-Hexen, 4-Methyl-1-penten, 1-Octen, Norbornen, Norbornadien oder Verbindungen des Typs 1,4,5,8-Dimethano-1,2,3,4,4a,5,8,8a-octahydronaphthalin, 2-Methyl-1,4,5,8-dimethano-1,2,3,4,4a,5,8,8a-octahydronaphthalin, 2-Ethyl-1,4,5,8-dimethano-1,2,3,4,4a,5,8,8a-octahydronaphthalin oder 2,3-Dimethyl-1,4,5,8-dimethano-1,2,3,4,4a,5,8,8a-octahydronaphthalin. Bevorzugt werden Propylen, 1-Buten und Norbornen.

Die Dauer der Polymerisation ist beliebig, da das erfindungsgemäß zu verwendende Katalysatorsystem einen nur geringen zeitabhängigen Abfall der Polymerisationsaktivität zeigt.

Das erfindungsgemäße Verfahren zeichnet sich dadurch aus, daß die bevorzugt verwendeten Zirkon- und Hafnium-Verbindungen sehr temperaturstabil sind, so daß sie auch bei Temperaturen bis 90°C eingesetzt werden können. Außerdem können die als Cokatalysatoren dienenden Aluminoxane in geringerer Konzentration als bisher zugesetzt werden. Schließlich ist es nunmehr möglich, Syndio-Isoblockpolymere bei technisch interessanten Temperaturen herzustellen.

Das erfindungsgemäße Syndio-Isoblockpolymer ist ein Polymer eines 1-Olefins der Formel R-CH=CHR′, worin R und R′ die obige Bedeutung haben. Insbesondere ist das Polymer ein Propylenpolymer.

In den Molekülketten dieses Polymers sind isotaktische und syndiotaktische Sequenzen enthalten. Vorzugsweise bestehen die Molekülketten nur aus isotaktischen und syndiotaktischen Sequenzen.

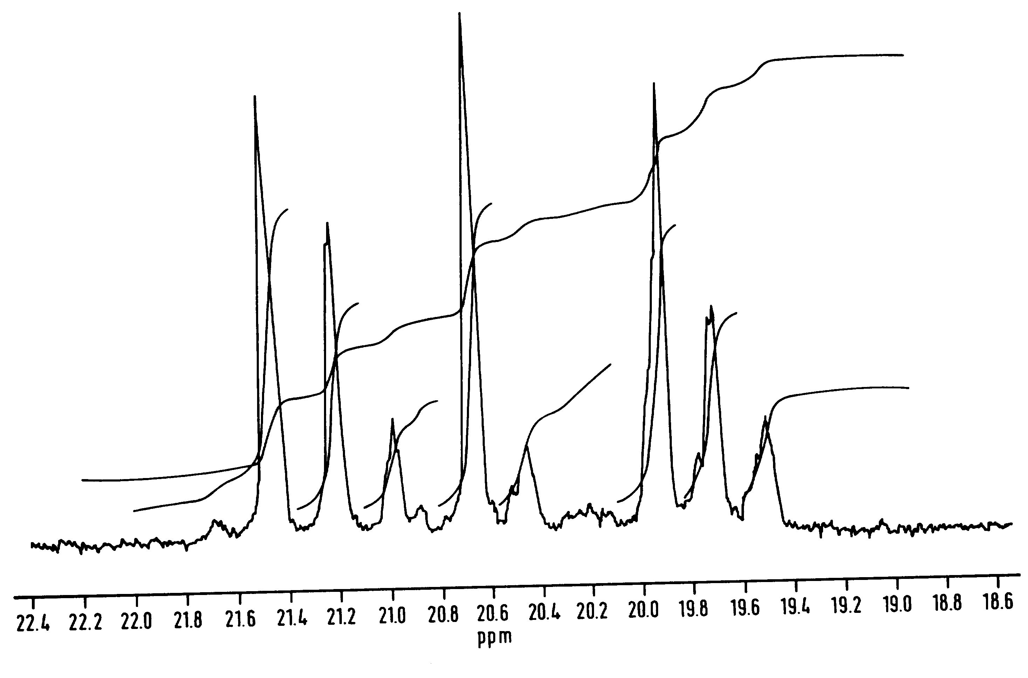

Das Polymere wird exakt durch ein ¹³C-NMR-Spektrum gemäß der Figur charakterisiert.

Infolge dieses sterischen Aufbaus sind die erfindungsgemäßen Syndio-Isoblockpolymeren je nach Molmasse und syndiotaktischer bzw. isotaktischer Sequenzlänge amorph oder teilkristallin. In Abhängigkeit von der Kristallinität werden die Polymeren als körnige Pulver, kompakte Massen oder Flüssigkeiten erhalten. Die teilkristallinen Syndio-Isoblockpolymeren weisen im Vergleich zu isotaktischen Polymeren einen niedrigeren Schmelzpunkt auf. Syndio-Isoblockpolymere besitzen teilweise kautschukartige Eigenschaften.

Die nachfolgenden Beispiele sollen die Erfindung erläutern.

Es bedeuten:
- VZ =: Viskositätszahl in cm³/g
- M_{w} =: Molmassengewichtsmittel in g/mol
- M_{w}/Mₙ =: Polydispersität ermittelt durch Gelpermeationschromatographie (GPC) und
- II =: Isotaktischer Index, bestimmt durch ¹³C-NMR-Spektroskopie
- nᵢₛₒ =: Mittlere Länge der isotaktischen Sequenzen
- n_{syn} =: Mittlere Länge der syndiotaktischen Sequenzen.

### Beispiel 1

### Isopropyliden-(9-fluorenyl-3-methylcyclopentadienyl)-hafnium-dichlorid

6,9 g (41,6 mmol) Fluoren wurden in 30 cm³ THF gelöst und mit 41,6 mmol einer 2,5 molaren Hexan-Lösung von Butyllithium versetzt. Nach 15 min Rühren wurde die Lösung bei 0°C zu einer Lösung von 5,0 g (41,6 mmol) 2,6,6-Trimethylfulven in 30 cm³ THF gegeben und über Nacht gerührt. Nach der Zugabe von 40 cm³ Wasser wurde der Ansatz ausgeethert. Die organische Phase wurde über MgSO₄ getrocknet und eingeengt. Bei -35°C kristallisierten in mehreren Fraktionen insgesamt 5,8 g (49 %) Isopropyl-(9-fluorenyl-3-methylcyclopentadien). Korrekte Elementaranalyse. Die ¹H-NMR-Spektrum zeigte zwei Isomere (3:1). Das Massenspektrum zeigte M⁺ = 286.

3,79 g (13,3 mmol) des Liganden wurden in 40 cm³ THF bei 0°C mit 17,0 cm³ (26,5 mmol) einer 1,6 molaren Hexan-Lösung von Buthyllithium versetzt. Nach 30 min Rühren bei Raumtemperatur wurde das Lösemittel abgezogen, der rote Rückstand mehrmals mit Hexan gewaschen und lange im Ölpumpenvakuum getrocknet. 4,25 g (13,3 mmol) HfCl₄ wurden in 60 cm³ CH₂Cl₃ suspendiert und bei -78°C mit dem Dilithiosalz versetzt. Nach dem langsamen Aufwärmen auf Raumtemperatur wurde die orange Mischung noch 2 h gerührt und anschließend über eine G4-Fritte filtriert. Das Filtrat wurde eingeengt und bei -35°C der Kristallisation überlassen. Es wurden 3,2 g (45 %) des Hafnium-Komplexes als gelboranges Pulver erhalten. ¹H-NMR-SSpektrum (100 MHz, CDCl₃): 7,1-8,2 (m, 8, arom.H), 5,91, 5,55, 5,37 (3xdd, 3x1, Cp-H), 2,38, 2,35 (2x5, 2x3, C(CH₃)₂), 2,11 (s, 3, Cp-CH₃). Korrekte Elementaranalysen. Das Massenspektrum zeigte M⁺ = 534.

### Beispiel 2

### Isopropyliden-(9-fluorenyl-3-methylcyclopentadienyl)-zirkondichlorid

Die Synthese dieser Verbindung wurde analog Beispiel 1 durchgeführt, wobei anstelle des HfCl₄ 13,3 mmol ZrCl₄ eingesetzt wurden.

### Beispiel 3

Ein Trockener 16 dm³ Kessel wurde mit Stickstoff gespült und mit 10 dm³ flüssigem Propylen befüllt. Dann wurden 30 cm³ toluolische Methylaluminoxanlösung (= MAO, entsprechend 46,7 mmol Al, mittlerer Oligomerisierungsgrad n = 30) zugegeben und der Ansatz bei 30°C 15 Minuten gerührt.

Parallel dazu wurden 96 mg (0,18 mmol) Fluorenylisopropyliden-2-methyl-cyclopentadienyl-hafniumdichlorid in 15 cm³ MAO-Lösung (= 23,3 mmol Al) gelöst und durch 15 minütiges Stehenlassen voraktiviert.

Die Lösung wurde dann in den Kessel gegeben. Das Polymerisationssystem wurde auf eine Temperatur von 70°C gebracht und dann 3 Stunden bei dieser Temperatur gehalten.

Es wurden 0,47 kg Syndio-Isoblockpolymer erhalten. Die Aktivität des Metallocens betrug somit 1,63 kg Polymer/g Metallocen/h.

Am Polymeren wurden die folgenden analytischen Daten ermittelt:
VZ = 140 cm³/g, M_{w} = 160 900, Mₙ = 67 000, M_{w}/Mₙ = 2,4 n_{syn} = 3,6, nᵢₛₒ = 3,5.

¹³C-NMR-spektroskopisch wurden folgende stereochemische Pentaden-Zusammensetzungen des Polymeren gefunden:
mmmm : ∼ 18 %, mmmr: ∼ 14 %, rmmr: ∼ 5 %, mmrr: ∼ 20 % mmrm+rmrr: ∼ 5 %, mrmr: ∼ 0 %, rrrr: ∼ 19 %, mrrr: ∼ 13 % mrrm: ∼ 7 %.

### Beispiel 4

Es wurde analog Beispiel 3 verfahren. Als Polymerisationstemperatur wurde jedoch 60°C gewählt. Die Polymerisationsdauer betrug 5 Stunden. Es wurden 70 mg Metallocenverbindung eingesetzt.

0,39 kg Syndio-Isoblockpolymer wurden erhalten. Die Aktivität des Metallocens betrug somit 0,93 kg Polymer/kg Metallocen/h.

Am Polymeren wurden die folgenden analytischen Daten ermittelt:
VZ = 266 cm³/g, M_{w} = 290 000, Mₙ = 93 000, M_{w}/Mₙ = 3,0 n_{syn} = 3,8, nᵢₛₒ = 3,8,

mmmm : ∼ 20 %, mmmr: ∼ 13 %, rmmr: ∼ 6 %, mmrr: m∼ 20 % mmrm+rmrr: ∼ 5 %, mrmr: ∼ 0 %, rrrr: ∼ 21 %, mrrr: ∼ 11 % mrrm: ∼ 6 %.

### Beispiel 5

Es wurde analog Beispiel 3 verfahren. Als Polymerisationstemperatur wurde jedoch 50°C gewählt. Die Polymerisationsdauer betrug 4 Stunden. 51 mg Metallocenverbindung wurden in der entsprechenden Menge MAO eingesetzt.

Es wurden 0,17 kg Syndio-Isoblockpolymer erhalten. Die Aktivität des Metallocens betrug somit 0,83 kg Polymer/g Metallocen/h.

Am Polymeren wurden die folgenden analytischen Daten ermittelt:
VZ = 263 cm³/g, M_{w} = 330 000, Mₙ = 110 000, M_{w}/Mₙ = 3,0 n_{syn} = 3,3, nᵢₛₒ = 3,7,

mmmm : ∼ 21 %, mmmr: ∼ 14 %, rmmr: ∼ 7 %, mmrr: ∼ 23 % mmrm+rmrr: ∼ 2 %, mrmr: -, rrrr: ∼ 17 %, mrrr: ∼ 11 % mrrm: ∼ 6 %.

### Beispiel 6

Es wurde analog Beispiel 3 verfahren. Als Polymerisationstemperatur wurde jedoch 40°C gewählt. Die polymerisationsdauer betrug 6 Stunden. Es wurden 50 mg Metallocenverbindung eingesetzt.

0,11 kg Syndio-Isoblockpolymer wurden erhalten. Die Aktivität des Metallocens betrug somit 0,36 kg Polymer/kg Metallocen/h.

Am Polymeren wurden die folgenden analytischen Daten ermittelt:
VZ = 181 cm³/g, M_{w} = 240 000, Mₙ = 58 000, M_{w}/Mₙ = 4,1 n_{syn} = 4,0, nᵢₛₒ = 3,9,

mmmm : ∼ 18 %, mmmr: ∼ 13 %, rmmr: ∼ 6 %, mmrr: ∼ 23 % mmrm+rmrr: ∼ 3 %, mrmr: -, rrrr: ∼ 19 %, mrrr: ∼ 12 % mrrm: ∼ 6 %.

### Beispiel 7

Verfahren wurde analog Beispiel 3. Als Polymerisationstemperatur wurde jedoch 10°C gewählt. Die Polymerisationsdauer betrug 14 Stunden. Es wurden 52 mg Metallocenverbindung eingesetzt.

0,04 kg Syndio-Isoblockpolymer wurden erhalten. Die Aktivität des Metallocens betrug somit 0,05 kg Polymer/g Metallocen/h.

VZ = 90 cm³/g, M_{w} = 97 000, Mₙ = 32 000, M_{w}/Mₙ = 3,0, n_{syn} = 4,3, nᵢₛₒ = 3,6,

mmmm : - 17 %, mmmr: ∼ 13 %, rmmr: ∼ 5 %, mmrr: ∼ 24 % mmrm+rmrr: ∼ 0,8 %, mrmr: -, rrrr: ∼ 21 %, mrrr: ∼ 13 % mrrm: ∼ 6 %.

### Beispiel 8

Ein trockener 16 dm³ Kessel wurde mit Stickstoff gespült und mit 10 dm³ flüssigem Propylen befüllt. Dann wurden 30 cm³ toluolische Methylaluminoxanlösung (= MAO, entsprechend 46,7 mmol Al, mittlerer Oligomerisierungsgrad n = 30) zugegeben und der Ansatz bei 30°C 15 Minuten gerührt.

Parallel dazu wurden 20 mg (0,04 mmol) Fluorenylisopropyliden-2-methyl-cyclopentadienyl-zirkondichlorid in 15 cm³ MAO (= 23,3 mmol Al) gelöst und durch 15 minütiges Stehenlassen voraktiviert.

Die Lösung wurde dann in den Kessel gegeben. Das Polymerisationssystem wurde auf eine Temperatur von 70°C gebracht und dann 3 Stunden bei dieser Temperatur gehalten.

Es wurden 0,91 kg Syndio-Isoblockpolymer erhalten. Die Aktivität des Metallocens betrug somit 15,2 kg Polymer/g Metallocen/h.

Am Polymeren wurden die folgenden analytischen Daten ermittelt:
VZ = 12 cm³/g, M_{w} = 5 000, Mₙ = 2 500, M_{w}/Mₙ = 2,0, n_{syn} = 3,7, nᵢₛₒ = 3,7.

¹³C-NMR-spektroskopisch wurden folgende stereochemischen Pentaden-Zusammensetzungen des Polymeren gefunden:

mmmm : ∼ 17 %, mmmr: ∼ 15 %, rmmr: ∼ 4 %, mmrr: ∼ 21 % mmrm+rmrr: ∼ 6 %, mrmr: -, rrrr: ∼ 17 %, mrrr: ∼ 14 % mrrm: ∼ 6 %.

### Beispiel 9

Es wurde analog Beispiel 8 verfahren. Als Polymerisationstemperatur wurde jedoch 60°C gewählt. Die Polymerisationsdauer betrug 5 Stunden. Es wurden 35 mg Metallocenverbindung eingesetzt.

Es wurden 1,24 kg Syndio-Isoblockpolymer erhalten. Die Aktivität des Metallocens betrug somit 7,03 kg Polymer/g Metallocen/h.

Am Polymeren wurden die folgenden analytischen Daten ermittelt:
VZ = 54 cm³/g, M_{w} = 47 250, Mₙ = 22 500, M_{w}/Mₙ = 2,1, n_{syn} = 4,0, nᵢₛₒ = 4,1.

mmmm : ∼ 21 %, mmmr: ∼ 14 %, rmmr: ∼ 4 %, mmrr: ∼ 20 % mmrm+rmrr: ∼ 5 %, mrmr: -, rrrr: ∼ 20 %, mrrr: ∼ 10 % mrrm: ∼ 8 %.

### Beispiel 10

Es wurde analog Beispiel 8 verfahren. Als Polymerisationstemperatur wurde jedoch 50°C gewählt. Die Polymerisationsdauer betrug 6 Stunden. Es wurden 27 mg Metallocenverbindung eingesetzt.

Es wurden 0,9 kg Syndio-Isoblockpolymer erhalten. Die Aktivität des Metallocens betrug somit 5,6 kg Polymer/g Metallocen/h.

Am Polymeren wurden die folgenden analytischen Daten ermittelt:
VZ = 54 cm³/g, M_{w} = 47 500, Mₙ = 21 500, M_{w}/Mₙ = 2,2, n_{syn} = 3,7, nᵢₛₒ = 4,0,

mmmm : ∼ 20 %, mmmr: ∼ 13 %, rmmr: ∼ 6 %, mmrr: ∼ 24 % mmrm+rmrr: ∼ 2 %, mrmr: -, rrrr: ∼ 18 %, mrrr: ∼ 13 % mrrm: ∼ 4 %.

### Beispiel 11

Es wurde analog Beispiel 8 verfahren. Als Polymerisationstemperatur wurde jedoch 40°C gewählt. Die polymerisationsdauer betrug 4 Stunden. Es wurden 25 mg Metallocenverbindung eingesetzt.

0,45 kg Syndio-Isoblockpolymer wurden erhalten. Die Aktivität des Metallocens betrug somit 4,5 kg Polymer/g Metallocen/h.

Am Polymeren wurden die folgenden analytischen Daten ermittelt:
VZ = 60 cm³/g, M_{w} - 54 600, Mₙ = 21 700, M_{w}/Mₙ = 1,9, n_{syn} = 3,7, nᵢₛₒ = 3,7.

mmmm : ∼ 16 %, mmmr: ∼ 12 %, rmmr: ∼ 8 %, mmrr: ∼ 25 % mmrm+rmrr: ∼ 2 %, mrmr: -, rrrr: ∼ 20 %, mrrr: ∼ 11 % mrrm: ∼ 6 %.

### Beispiel 12

Verfahren wurde analog Beispiel 8. Als Polymerisationstemperatur wurde jedoch 10°C gewählt. Die Polymerisationsdauer betrug 16 Stunden. Es wurden 50 mg Metallocenverbindung eingesetzt.

0,4 kg Syndio-Isoblockpolymer wurden erhalten. Die Aktivität des Metallocens betrug somit 0,5 kg Polymer/g Metallocen/h.

Am Polymeren wurden die folgenden analytischen Daten ermittelt:
VZ = 52 cm³/g, M_{w} = 44 000, Mₙ = 17 000, M_{w}/Mₙ = 2,6, n_{syn} = 4,5, nᵢₛₒ = 4,4.

mmmm : ∼ 19 %, mmmr: ∼ 14 %, rmmr: ∼ 5 %, mmrr: ∼ 22 % mmrm+rmrr: ∼ 0,8 %, mrmr: -, rrrr: ∼ 20 %, mrrr: ∼ 13,2 % mrrm: ∼ 6 %.

## Patentansprüche

1. Verfahren zur Herstellung eines Syndio-lsoblockpolymers, mit Molekülketten, in denen syndiotaktische und isotaktische Sequenzen enthalten sind, und mit einer Sequenzlänge von 3 bis 50 Monomereinheiten, durch Polymerisation eines Olefins mit mindestens 3 C-Atomen der Formel RCH = CHR', worin R und R' gleich oder verschieden sind und ein Wasserstoffatom oder einen Alkylrest mit 1 bis 14 C-Atomen bedeuten oder R und R' mit den sie verbindenden C-Atomen einen Ring bilden, bei einer Temperatur von -60 bis 100°C, einem Druck von 0,5 bis 100 bar, in Lösung, in Suspension oder in der Gasphase, in Gegenwart eines Katalysators, welcher aus einem Metallocen und einem Aluminoxan besteht, dadurch gekennzeichnet, daß das Metallocen eine Verbindung der Formel I 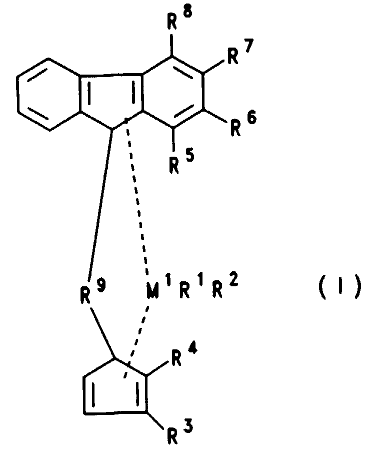 ist, worin
M¹ Titan, Zirkon, Hafnium, Vanadium, Niob oder Tantal ist,
R¹ und R² gleich oder verschieden sind und ein Wasserstoffatom, ein Halogenatom, eine C₁-C₁₀-Alkylgruppe, eine C₁-C₁₀-Alkoxygruppe, eine C₆-C₁₀-Arylgruppe, eine C₆-C₁₀-Aryloxygruppe, eine C₂-C₁₀-Alkenylgruppe, eine C₇-C₄₀-Arylalkylgruppe, eine C₇-C₄₀-Alkylarylgruppe oder eine C₈-C₄₀-Arylalkenylgruppe bedeuten,
R³, R⁴, R⁵, R⁶, R⁷ und R⁸ ein Wasserstoffatom, eine C₁-C₁₀-Alkylgruppe, eine C₁-C₁₀-Alkoxygruppe, eine C₆-C₁₀-Arylgruppe, eine C₆-C₁₀-Aryloxygruppe, eine C₂-C₁₀-Alkenylgruppe, eine C₇-C₄₀-Arylalkylgruppe, eine C₇-C₄₀-Alkylarylgruppe, eine C₈-C₄₀Arylalkenylgruppe oder ein Halogenatom ist, wobei die Reste R³, R⁴, R⁵, R⁶, R⁷ und R⁸ nicht gleichzeitig ein Wasserstoffatom bedeuten,
_{R}9 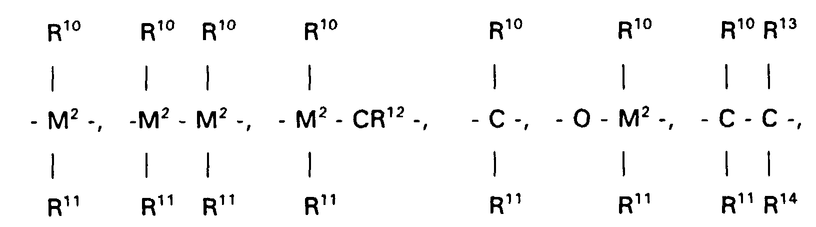 = BR¹⁰, =AIR¹⁰,-Ge-, -Sn-,-O-,-S-, = SO, = SO₂, = NR¹⁰, = CO, = PR¹⁰ oder = P(O)R¹⁰ ist, wobei R¹⁰, R¹¹, R¹², R¹³ und R¹⁴ gleich oder verschieden sind und ein Wasserstoffatom, ein Halogenatom, eine C₁-C₁₀-Alkylgruppe, eine C₁-C₁₀fluoralkylgruppe, eine C₆-C₁₀-Arylgruppe, eine C₁-C₁₀-Alkoxygruppe, eine C₂-C₂₀-Alkenylgruppe, eine C₇-C₄₀-Arylalkylgruppe, eine C₈-C₄₀-Arylalkenylgruppe oder eine C₇-C₄₀-Alkylarylgruppe bedeuten oder R¹⁰ und R¹¹ oder R¹⁰ und R¹² jeweils mit den sie verbindenden Atomen einen Ring bilden, und
M² Silizium, Germanium oder Zinn ist.

2. Verfahren nach Anspruch 1, dadurch gekennzeichnet, daß R³ eine C₁-C₁₀-Alkylgruppe bedeutet.

3. Verfahren nach Anspruch 1, dadurch gekennzeichnet, daß R³ eine Methylgruppe bedeutet.

4. Verfahren nach Anspruch 1, dadurch gekennzeichnet, daß das Metallocen Isopropyliden-(9-fluorenyl-3-methylcyclopentadienyl)-zirkondichlorid, Isopropyliden-(fluorenyl-2-methylcyclopentadienyl)-zirkondichlorid oder Isopropyliden-(9-fluorenyl-3-methylcyclopentadienyl)-hafniumdichlorid ist.

5. Verfahren nach einem oder mehreren der Ansprüche 1 bis 4, dadurch gekennzeichnet, daß Propylen polymerisiert ist.

6. Verbindung der Formel I 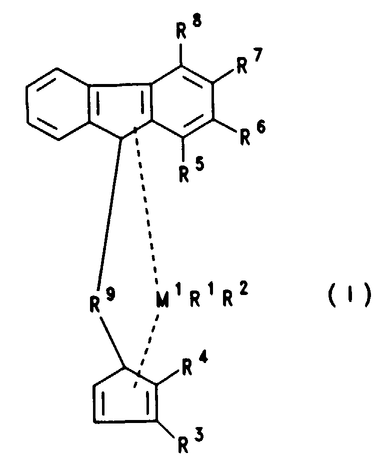 ,worin
M¹ Titan, Zirkon, Hafnium, Vanadium, Niob oder Tantal ist,
R¹ und R² gleich oder verschieden sind und ein Wasserstoffatom, ein Halogenatom, eine C₁-C₁₀-Alkylgruppe, eine C₁-C₁₀-Alkoxygruppe, eine C₆-C₁₀-Arylgruppe, eine C₆-C₁₀-Aryloxygruppe, eine C₂-C₁₀-Alkenylgruppe, eine C₇-C₄₀-Arylalkylgruppe, eine C₇-C₄₀-Alkylarylgruppe oder eine C₈-C₄₀-Arylalkenylgruppe bedeuten,
R³, R⁴, R⁵, R⁶, R⁷ und R⁸ ein Wasserstoffatom, eine C₁-C₁₀-Alkylgruppe, eine C₁-C₁₀-Alkoxygruppe, eine C₆-C₁₀-Arylgruppe, eine C₆-C₁₀-Aryloxygruppe, eine C₂-C₁₀-Alkenylgruppe, eine C₇-C₄₀-Arylalkylgruppe, eine C₇-C₄₀-Alkylarylgruppe eine C₈-C₄₀Arylalkenylgruppe oder ein Halogenatom ist, wobei die Reste R³, R⁴, R⁶, R⁵, R⁷ und R⁸ nicht gleichzeitig ein Wasserstoffatom bedeuten
_{R}9 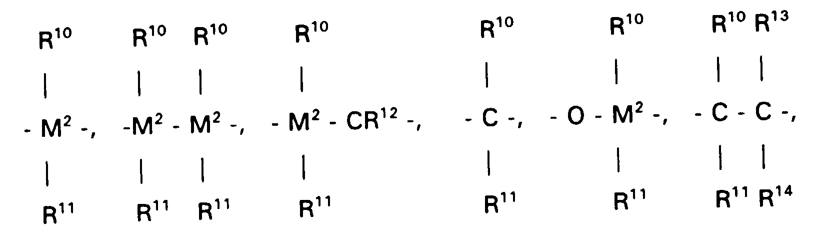 = BR¹⁰, = AIR¹⁰, -Ge-, -Sn-, -O-, -S-, = SO, = SO₂, = NR¹⁰, = CO, = PR¹⁰ oder = P(O)R¹⁰ ist, wobei R¹⁰, R¹¹, R¹², R¹³ und R¹⁴ gleich oder verschieden sind und ein Wasserstoffatom, ein Halogenatom, eine C₁-C₁₀-Alkylgruppe, eine C₁-C₁₀Fluoralkylgruppe, eine C₆-C₁₀-Arylgruppe, eine C₁-C₁₀-Alkoxygruppe, eine C₂-C₂₀-Alkenylgruppe, eine C₇-C₄₀-Arylalkylgruppe, eine C₈-C₄₀-Arylalkenylgruppe oder eine C₇-C₄₀-Alkylarylgruppe bedeuten oder R¹⁰ und R¹¹ oder R¹⁰ und R¹² jeweils mit den sie verbindenden Atomen einen Ring bilden, und
M² Silizium, Germanium oder Zinn ist.

7. Verbindung gemäß Anspruch 6, dadurch gekennzeichnet, daß R³ eine C₁-C₁₀-Alkylgruppe bedeutet.

8. Verbindung gemäß Anspruch 6, dadurch gekennzeichnet, daß R³ eine Methylgruppe bedeutet.

9. Isopropyliden-(9-fluorenyl)-(3-methylcyclopentadienyl)-zirkondichlorid, Isopropyliden-(fluorenyl)-(2-methylcyclopentadienyl)-zirkondichlorid, Isopropyliden-(9-fluorenyl)-(3-methylcyclopentadienyl)-hafniumdichlorid.

10. Katalysator, welcher aus einer Verbindung der Formel I gemäß einem oder mehreren der Ansprüche 6 bis 9 und einem Aluminoxan besteht.

## Claims

1. A process for the preparation of a syndio-isoblock polymer having molecular chains in which syndiotactic and isotactic sequences are present, and having a sequence length of 3 to 50 monomer units, by polymerization of an olefin having at least 3 carbon atoms of the formula RCH = CHR' in which R and R' are identical or different and are a hydrogen atom or an alkyl radical having 1 to 14 carbon atoms or R and R' combine with the carbon atoms joining them together to form a ring at a temperature of -60 to 100°C, a pressure of 0.5 to 100 bar, in solution, in suspension or in the gas phase, in the presence of a catalyst which is composed of a metallocene and an aluminoxane, wherein the metallocene is a compound of the formula I 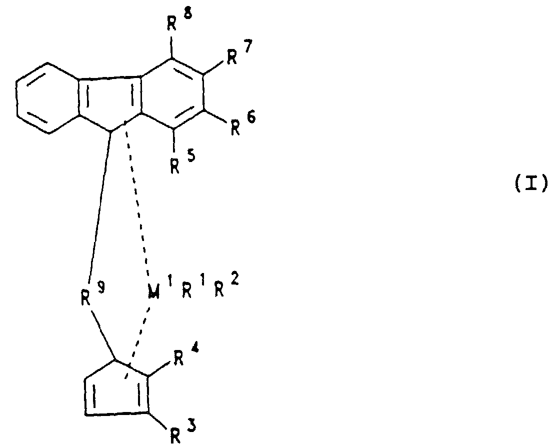 in which
M¹ is titanium, zirconium, hafnium, vanadium, niobium or tantalum,
R¹ and R² are identical or different and are a hydrogen atom, a halogen atom, C₁-C₁₀-alkyl, C₁-C₁₀-alkoxy, C₆-C₁₀-aryl, C₆-C₁₀-aryloxy, C₂-C₁₀-alkenyl, C₇-C₄₀-arylalkyl, C₇-C₄₀-alkylaryl or C₈-C₄₀-arylalkenyl,
R³, R⁴, R⁵, R⁶, R⁷ and R⁸ are hydrogen, C₁-C₁₀-alkyl, C₁-C₁₀-alkoxy, C₆-C₁₀-aryl, C₆-C₁₀-aryloxy, C₂-C₁₀-alkenyl, C₇-C₄₀-arylalkyl, C₇-C₄₀-alkylaryl, C₈-C₄₀-arylalkenyl or a halogen atom, but are not all hydrogen,
R⁹ is 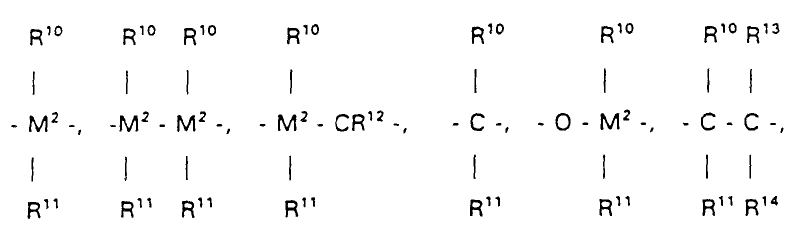 = BR¹⁰, = AlR¹⁰, -Ge-, -Sn-, -O- , -S- , = SO, = SO₂, = NR¹⁰, = CO, = PR¹⁰ or = P(O)R¹⁰, where R¹⁰, R¹¹, R¹², R¹³ and R¹⁴ are identical or different and are a hydrogen atom, a halogen atom, C₁-C₁₀-alkyl, C₁-C₁₀-fluoroalkyl, C₆-C₁₀-aryl, C₁-C₁₀-alkoxy, C₂-C₂₀-alkenyl, C₇-C₄₀-arylalkyl, C₈-C₄₀-arylalkenyl or C₇-C₄₀-alkylaryl, or R¹⁰ and R¹¹, or R¹⁰ and R¹², in each case with the atoms joining them, form a ring, and
M² is silicon, germanium or tin.

2. The process as claimed in claim 1, wherein R³ is C₁-C₁₀-alkyl.

3. The process as claimed in claim 1, wherein R³ is methyl.

4. The process as claimed in claim 1, wherein the metallocene is isopropylidene(9-fluorenyl-3-methylcyclopentadienyl)zirconium dichloride, isopropylidene(fluorenyl-2-methylcyclopentadienyl)zirconium dichloride or isopropylidene(9-fluorenyl-3-methylcyclopentadienyl)hafnium dichloride.

5. The process as claimed in one or more of claims 1 to 4, wherein propylene is polymerized.

6. A compound of the formula I 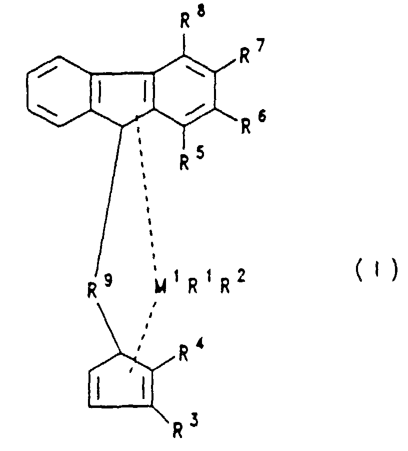 in which
M¹ is titanium, zirconium, hafnium, vanadium, niobium or tantalum,
R¹ and R² are identical or different and are a hydrogen atom, a halogen atom, C₁-C₁₀-alkyl, C₁-C₁₀-alkoxy, C₆-C₁₀-aryl, C₆-C₁₀-aryloxy, C₂-C₁₀-alkenyl, C₇-C₄₀-arylalkyl, C₇-C₄₀-alkylaryl or C₈-C₄₀-arylalkenyl,
R³, R⁴, R⁵, R⁶, R⁷ and R⁸ are hydrogen, C₁-C₁₀-alkyl, C₁-C₁₀-alkoxy, C₆-C₁₀-aryl, C₆-C₁₀-aryloxy, C₂-C₁₀-alkenyl, C₇-C₄₀-arylalkyl, C₇-C₄₀-alkylaryl, C₈-C₄₀-arylalkenyl or halogen atom, but are not all hydrogen,
R⁹ is 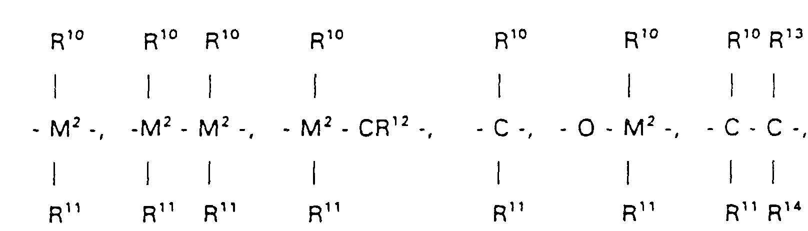 = BR¹⁰, = AlR¹⁰, -Ge-, -Sn-, -O-, -S-, = SO, = SO₂, = NR¹⁰ = CO, = PR¹⁰ or = P(O)R¹⁰, where R¹⁰, R¹¹, R¹², R¹³ and R¹⁴ are identical or different and are a hydrogen atom, a halogen atom, C₁-C₁₀-alkyl, C₁-C₁₀-fluoroalkyl, C₆-C₁₀-aryl, C₁-C₁₀-alkoxy, C₂-C₂₀-alkenyl, C₇-C₄₀-arylalkyl, C₈-C₄₀-arylalkenyl or C₇-C₄₀-alkylaryl, or R¹⁰ and R¹¹, or R¹⁰ and R¹², in each case with the atoms joining them, form a ring, and
M² is silicon, germanium or tin.

7. A compound as claimed in claim 6, wherein R³ is C₁-C₁₀-alkyl.

8. A compound as claimed in claim 6, wherein R³ is methyl.

9. Isopropylidene(9-fluorenyl)(3-methylcyclopentadienyl)zirconium dichloride, isopropylidene(fluorenyl)(2-methylcyclopentadienyl)zirconium dichloride or isopropylidene(9-fluorenyl)(3-methyl-cyclopentadienyl)hafnium dichloride.

10. A catalyst which is composed of a metallocene of the formula I as claimed in one or more of claims 6 to 9 and an aluminoxane.

## Revendications

1. Procédé pour préparer un polymère syndio-isoséquencé, ayant des chaînes moléculaires contenant des séquences syndiotactiques et des séquences isotactiques, ayant une longueur de séquence de 3 à 50 motifs monomères, par polymérisation d'une oléfine ayant au moins 3 atomes de carbone, de formule RCH=CHR' dans laquelle R et R' sont identiques ou différents et représentent un atome d'hydrogène ou un radical alkyle ayant de 1 à 14 atomes de carbone, ou bien R et R' forment un cycle avec les atomes de carbone qui les relient, à une température de -60 à 100°C, sous une pression de 0,5 à 100 bar, en solution, en suspension ou en phase gazeuse, en présence d'un catalyseur constitué d'un métallocène et d'un aluminoxane, caractérisé en ce que le métallocène est un composé de formule I 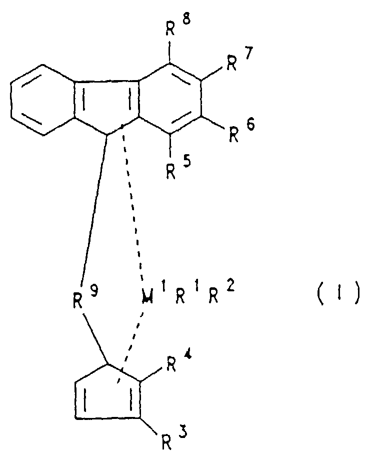 dans laquelle
M¹ est le titane, le zirconium, le hafnium, le vanadium, le niobium ou le tantale,
R¹ et R² sont identiques ou différents et représentent un atome d'hydrogène, un atome d'halogène, un groupe alkyle en C₁-C₁₀, un groupe alcoxy en C₁-C₁₀, un groupe aryle en C₆-C₁₀, un groupe aryloxy en C₆-C₁₀, un groupe alcényle en C₂-C₁₀, un groupe arylalkyle en C₇-C₄₀, un groupe alkylaryle en C₇-C₄₀ ou un groupe arylalcényle en C₈-C₄₀,
R³, R⁴, R⁵, R⁶, R⁷ et R⁸ sont un atome d'hydrogène, un groupe alkyle en C₁-C₁₀, un groupe alcoxy en C₁-C₁₀, un groupe aryle en C₆-C₁₀, un groupe aryloxy en C₆-C₁₀, un groupe alcényle en C₂-C₁₀, un groupe arylalkyle en C₇-C₄₀, un groupe alkylaryle en C₇-C₄₀, un groupe arylalcényle en C₈-C₄₀ ou un atome d'halogène, auquel cas les radicaux R³, R⁴, R⁵, R⁶, R⁷ et R⁸ ne représentent pas simultanément des atomes d'hydrogène,
R⁹ est 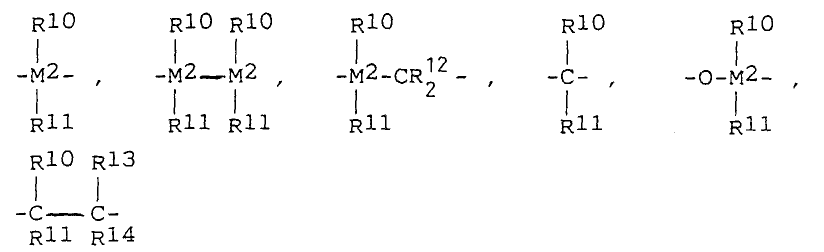 =BR¹⁰, AlR¹⁰, -Ge-, -Sn-, -O-, -S-, =SO, =SO₂, =NR¹⁰, =CO, =PR¹⁰ ou =P(O)R¹⁰, où R¹⁰, R¹¹, R¹², R¹³ et R¹⁴ sont identiques ou différents et représentent un atome d'halogène, un groupe alkyle en C₁-C₁₀, un groupe fluoralkyle en C₁-C₁₀, un groupe fluoraryle en C₆-C₁₀, un groupe aryle en C₆-C₁₀, un groupe alcoxy en C₁-C₁₀, un groupe alcényle en C₂-C₁₀, un groupe arylalkyle en C₇-C₄₀, un groupe arylalcényle en C₈-C₄₀ ou un groupe alkylaryle en C₇-C₄₀, ou encore R¹⁰ et R¹¹, ou R¹⁰ et R¹², forment un cycle avec les atomes qui les relient, et
M² est le silicium, le germanium ou l'étain.

2. Procédé selon la revendication 1, caractérisé en ce que R³ est un groupe alkyle en C₁-C₁₀.

3. Procédé selon la revendication 1, caractérisé en ce que R³ est un groupe méthyle.

4. Procédé selon la revendication 1, caractérisé en ce que le métallocène est le dichlorure d'isopropylidène-(9-fluorényl-3-méthylcyclopentadiényl)-zirconium, le dichlorure d'isopropylidène-(fluorényl-2-méthylcyclopentadiényl)-zirconium ou le dichlorure d'isopropylidène-(9-fluorényl-3-méthylcyclopentadiényl)-hafnium.

5. Procédé selon l'une ou plusieurs des revendications 1 à 4, caractérisé en ce que le propylène est polymérisé.

6. Composé de formule I 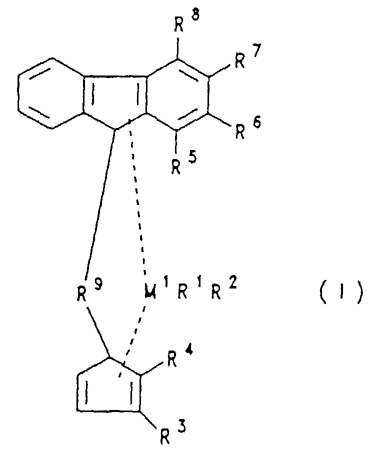 dans laquelle
M¹ est le titane, le zirconium, le hafnium, le vanadium, le niobium ou le tantale,
R¹ et R² sont identiques ou différents et représentent un atome d'hydrogène, un atome d'halogène, un groupe alkyle en C₁-C₁₀, un groupe alcoxy en C₁-C₁₀, un groupe aryle en C₆-C₁₀, un groupe aryloxy en C₆-C₁₀, un groupe alcényle en C₂-C₁₀, un groupe arylalkyle en C₇-C₄₀, un groupe alkylaryle en C₇-C₄₀ ou un groupe arylalcényle en C₈-C₄₀,
R³, R⁴, R⁵, R⁶, R⁷ et R⁸ sont un atome d'hydrogène, un groupe alkyle en C₁-C₁₀, un groupe alcoxy en C₁-C₁₀, un groupe aryle en C₆-C₁₀, un groupe aryloxy en C₆-C₁₀, un groupe alcényle en C₂-C₁₀, un groupe arylalkyle en C₇-C₄₀, un groupe alkylaryle en C₇-C₄₀ ou un groupe arylalcényle en C₈-C₄₀, ou un atome d'halogène, auquel cas les radicaux R³, R⁴, R⁶, R⁵, R⁷ et R⁸ ne représentent pas simultanément un atome d'hydrogène,
R⁹ est 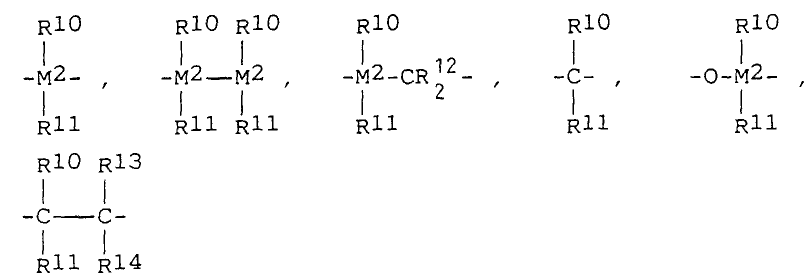 =BR¹⁰, AlR¹⁰, -Ge-, -Sn-, -O-, -S-, =SO, =SO₂, =NR¹⁰, =CO, =PR¹⁰ ou =P(O)R¹⁰, où R¹⁰, R¹¹, R¹², R¹³ et R¹⁴ sont identiques ou différents et représentent un atome d'hydrogène, un atome d'halogène, un groupe alkyle en C₁-C₁₀, un groupe fluoralkyle en C₁-C₁₀, un groupe aryle en C₆-C₁₀, un groupe alcoxy en C₁-C₁₀, un groupe alcényle en C₂-C₂₀, un groupe arylalkyle en C₇-C₄₀, un groupe arylalcényle en C₈-C₄₀ ou un groupe alkylaryle en C₇-C₄₀, ou bien R¹⁰ et R¹¹, ou R¹⁰ et R¹², forment un cycle avec les atomes qui les relient, et
M² est le silicium, le germanium ou l'étain.

7. Composé selon la revendication 6, caractérisé en ce que R³ est un groupe alkyle en C₁-C₁₀.

8. Composé selon la revendication 6, caractérisé en ce que R³ est le groupe méthyle.

9. Dichlorure d'isopropylidéne-(9-fluorényl-3-méthylcyclopentadiényl)-zirconium, dichlorure d'isopropylidène-(fluorényl-2-méthylcyclopentadienyl)-zirconium, dichlorure d'isopropylidène-(9-fluorényl-3-méthylcyclopentadiényl)-hafnium.

10. Catalyseur, constitué d'un métalocène de formule I selon l'une ou plusieurs des revendications 6 à 9, et d'un aluminoxane.
